# EUROPEAN PATENT SPECIFICATION

(11) **EP 3 453 089 B1**
(45) Date of publication and mention of the grant of the patent: **08.07.2020**
(21) Application number: 17733187.3
(22) Date of filing: 01.05.2017
(51) Int. Cl.: H02G 3/04, H02G 3/06, H02G 3/32

(54) **CABLE MOUNTING SYSTEM WITH CABLE EXPANSION COMPENSATION**
KABELMONTAGESYSTEM MIT KABELERWEITERUNGSAUSGLEICH
SYSTÈME DE MONTAGE DE CÂBLE À COMPENSATION D'EXPANSION DE CÂBLE

(30) Priority: 02.05.2016 US 201662330484 P; 28.04.2017 US 201715581037
(43) Date of publication of application: 13.03.2019
(73) Proprietor: Panduit Corp., Tinley Park, IL 60487 (US)
(72) Inventor: ROULEAU, Rodney G., Manhattan Illinois 60442 (US)
(74) Representative: Morrall, Jonathan Ian McLachlan
(86) International application number: PCT/US2017/030342
(87) International publication number: WO 2017/192420

(56) References cited:
- WO-A1-2009/142358
- WO-A2-2015/148345
- FR-A1- 2 588 426
- JP-A- H07 298 445
- JP-A- S57 106 317
- JP-U- S5 947 214
- JP-U- S62 129 225
- JP-U- S62 191 323
- KR-A- 20050 071 317
- US-A1- 2011 315 829
- US-A1- 2014 239 131

## Description

### Field of the Invention

The present invention relates to cables secured to a ladder rack, and more particularly to a cable mounting system for ladder racks that enables thermal expansion and contraction of cables secured to the ladder rack.

### Background of the Invention

Brackets and straps are typically used to secure cables to ladder racks for short circuit protection or general fastening. A common problem occurs when the cables attached to ladder racks expand or contract. The cables expand or contract at a different rate compared to the ladder rack. The cables move and as a result the connection between the cables and the ladder rack is often broken or damaged. Also, the expansion or contraction of the cables results in relative length changes that will put the cables under compression or tension depending on the direction of the temperature changes. In some situations, the thermal expansion joints of the cable tray will make the problem worse. The relative length differences between the cables and the tray can result in cable distortion, broken rungs, damaged brackets and ladder rack damage.

Therefore, it is desirable to improve the connection of the cables to the ladder racks to allow the cables to expand and contract independently thereby reducing the forces that build within the cables and eliminating damage to the cables and the ladder rack.

FR 2588426A1 discloses an invention that relates to assemblies of elements made of plastic such as a resin reinforced with fibres or with metallic elements, which are shaped in the form of a ladder, that is to say comprising at least two longitudinal members and crossmembers. In order to avoid any drilling in the field when assembling two longitudinal members of two elements and thus to overcome any migration of moisture into the longitudinal members via the drilling of these, each transverse member of the elements offers an internal conduit and the device comprises two dowel pins respectively fitted into the internal conduits of two transverse members of the elements, a fishblade applied against the two longitudinal members and having slots 44 facing the fitted dowel pins, and two screws screwed into the fitted dowel pins in order to immobilise them in the conduits, and to press the fishblade against the two longitudinal members. Preferably, no metallic element is visible in order to confer excellent electrical insulation.

KR 20050071317A describes a cable tray that can be easily installed at any place in a factory, a ship, an offshore, structure, or the like when wiring a cable.

WO 2009/142358A1 describes a cable tray used in a wiring operation in which relatively heavy cables or pipes are distributed in a plant, a vessel, a marine structure or the like. The cable tray includes side bars arranged in a direction in which a cable is wired and cross bars alternating with openings, wherein the side bars are formed integrally with and are bent in a direction from the cross bars. Compared to a conventional prefabricated cable tray, manufacturing processes are reduced in order to improve working efficiency, the opening can reduce the amount of material used and enable a light weight structure, and durability of the whole has been improved. Accordingly, relatively heavy pipes can be easily distributed in the cable tray.

JP S5947214U describes a way to obtain a polymer of uniform quality in the polymerization process of a synthetic rubber, by measuring the Mooney viscosity, Mooney viscosity- polymer conversion, overall styrene content and solution viscosity by means of a GPC device and automatically controlling the process so as to eliminate the differences between the measured and the set values. During and after the polymerization reaction of a synthetic rubber, the polymerization mixture is shunted and diluted in an automatic sampling/ diluting device 4, and the diluted mixture is passed through a GPC device 5. From the GPC chromatogram produced by the above device, at least one factor for controlling the reaction selected from the group consisting of viscosity, viscosity-conversion, overall styrene content and solution viscosity is determined by means of an arithmetic estimation unit 6.; Then, the above at least one reaction-controlling factor is controlled according to its difference from the set value to obtain the desired polymer. From the factors obtained from the above GPC chromatogram, the Mooney viscosity is determined according to the estimating equations I, II, and III wherein MV is a Mooney viscosity, A is a Mn or the like, B is Mn/M or the like, C is lambda, D is IP, and K, K0-5, alpha, beta, and gamma are constants.

JP S62129225U describes a cable bracket assembly.

JP H07298445A provides a liquid level detector for detecting the liquid level of a liquid stored in a container, regardless of the material or the arrangement of the container. The liquid level detector images the inside of the container, from a prescribed position entering an imaging range by a container opening end and the liquid level; and determines whether a distance from the container opening end to the liquid level in an imaged image is within a previously set threshold. The liquid level detector detects the position of the liquid level in the metallic container that is not transmitting light or the inside of the container, arranged and formed into a matrix form.

JP S57106317A describes a cable wrapping method for a cable rack. This involves a wrapping method to wrap a cable 1 between communication devices such as a switch or the like in a cable rack.

US 2014/239131A1 discloses a bracket assembly to secure a cable bundle to a ladder rung. The bracket assembly includes a metal bracket and protective grommets. The metal bracket has a first member, side walls and second members. The first member of the metal bracket is parallel to the second members of the metal bracket. The protective grommets are secured to the metal bracket. The protective grommets have a base member, sleeves extending from the base member, a side member and a bottom member. The assembled metal bracket and protective grommets receive the ladder rung and the sleeves of the protective grommets wrap around the cable bundle positioned on the ladder rung to secure the cable bundle.

US 2011/315829A1 discloses a cable retention device. The device may be used to restrain electrical cables routed along a cable support structure. These support structures are used in both internal and external settings, and the structures provide some physical support and protection to the electrical cables. In some high-power settings, these cables run from substations or electrical generators to a point within a facility. The support structures typically used in these settings do not fully restrain the cables. External forces, such as those that may occur during short circuit conditions, may result in movement of the electrical cables, which can lead to damage. Cable retention devices, referred to at times as cleats or clamps, are needed to restrain the cables. The cable retention device disclosed herein simultaneously restrains the cables and secures the cables to the cable support structure.; The device comprises a base and cap that are secured to each other to enclose a part of the cables and the cable support structure.

WO 2015/148345A2 discloses a cradle clamp bracket assembly. The cradle clamp bracket assembly secures cables to rungs of a ladder rack. The cradle clamp bracket assembly includes an elongated bracket having a first portion and a raised second portion. The first portion includes a slot located along the center of the first portion. The raised second portion includes a downwardly extending flange and at least one gusset to strengthen the bracket. The cradle clamp bracket assembly also includes a retainer that is received in the slot to engage the rung of the ladder rack.

### Summary of the Invention

According to an aspect of the present disclosure there is provided a cable mounting system for allowing thermal expansion and contraction of cables as defined in claim 1. According to another aspect of the present disclosure there is provided a method of mounting cables to a ladder rack system to enable thermal expansion and contraction of the cables as defined in claim 11. In one illustrative example, the cable mounting system is designed to allow thermal expansion and contraction of cables. The cable mounting system includes straight ladder rack segments and widened ladder rack segments. The straight ladder rack segments have side rails and a plurality of ladder rungs extending between the side rails. The widened ladder rack segments are positioned adjacent at least one of the straight ladder rack segments. The widened ladder rack segments have side rails, angled side rails, and a plurality of ladder rungs extending between the side rails. The angled side rails connect the side rails of adjacent straight ladder rack segments to the side rails of the widened ladder rack segment. The cable mounting system also includes cable bracket assemblies and saddle bracket assemblies. The cable bracket assemblies secure the cables to the ladder rungs of the straight ladder rack segments. The saddle bracket assemblies secure the cables to the ladder rungs of the widened ladder rack segments. The cable bracket assemblies allow axial movement of the cables secured to the ladder rack and the saddle bracket assemblies allow axial and lateral movement of the cables secured to the ladder rack.

### Brief Description of the Drawings

FIG. 1 is a top perspective view of the cable mounting system of the present invention.
FIG. 2 is a partial top perspective view of the cable mounting system of FIG. 1.
FIG. 3 is a bottom perspective view of the cable mounting system of FIG. 1.
FIG. 4 is a partial bottom perspective view of the cable mounting system of FIG. 3.
FIG. 5 is a partial side view of the cable bracket assembly and the saddle bracket assembly of the cable mounting system of FIG. 2 with a side rail of the ladder rack removed.
FIG. 6 is a side view of the cable bracket assembly of FIG. 5 securing cables to a ladder rung.
FIG. 7 is a perspective view of the cable bracket assembly of FIG. 6.
FIG. 8 is an exploded perspective view of the cable bracket assembly of FIG. 7.
FIG. 9 is a side view of the saddle bracket assembly of FIG. 5 securing cables to a ladder rung.

### Detailed Description

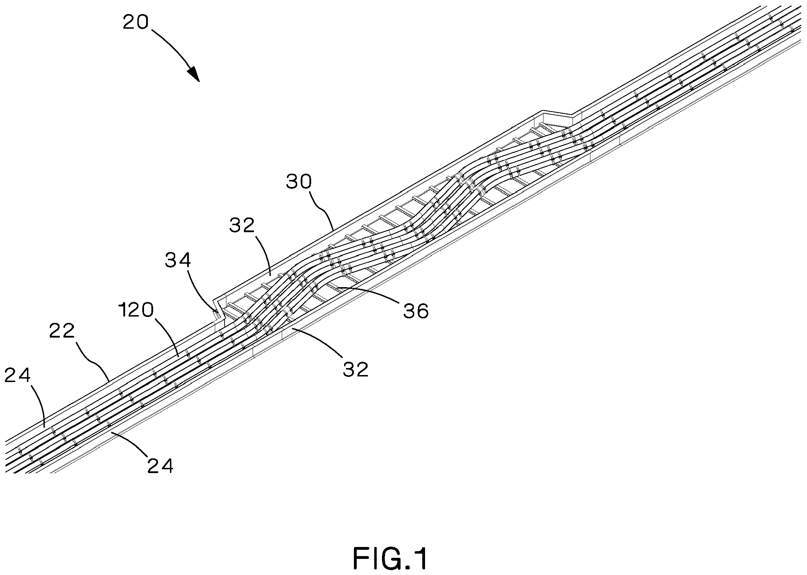

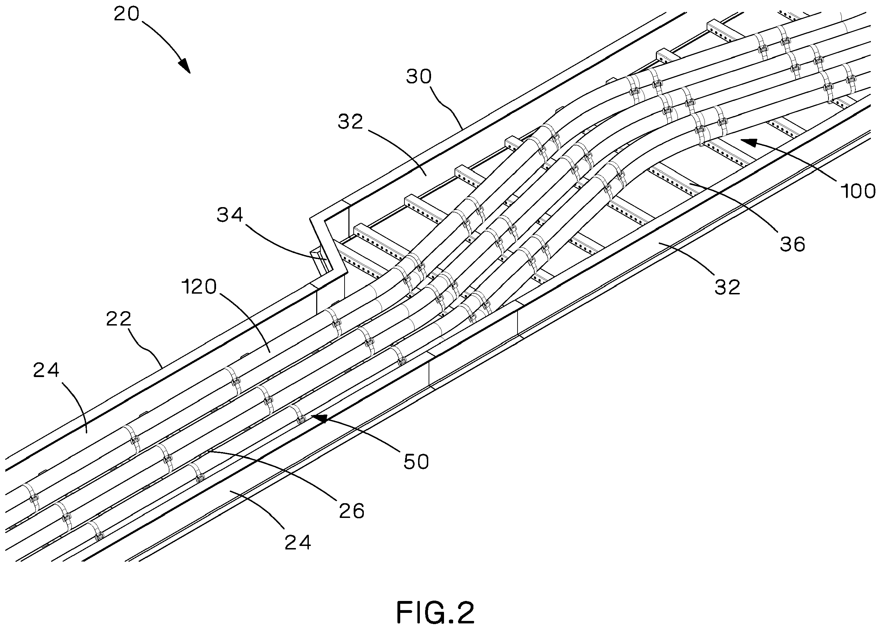

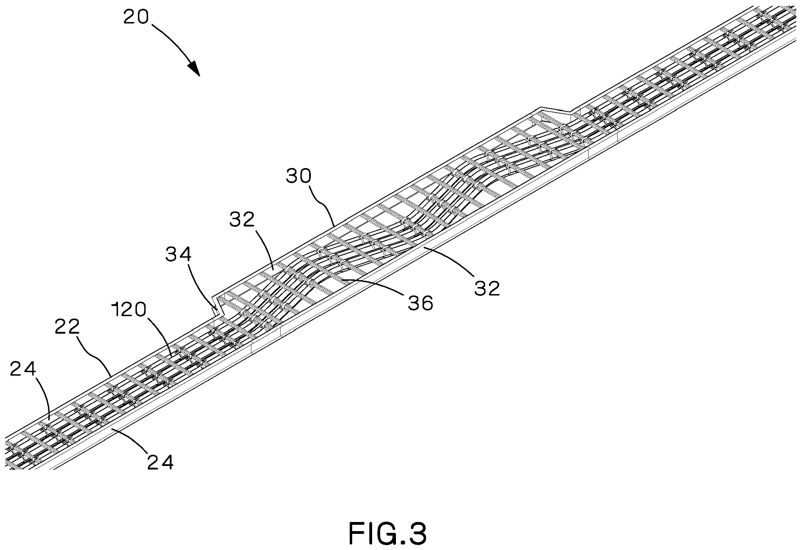

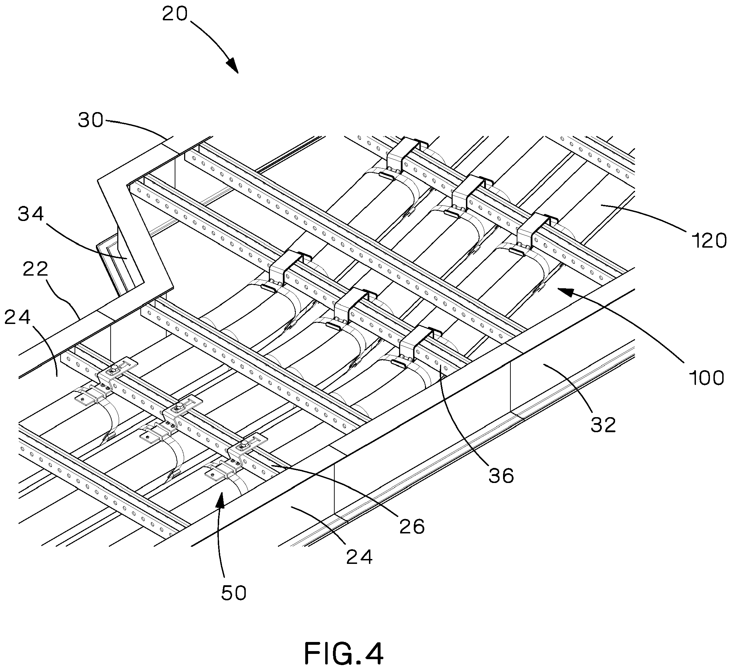

The present invention is a cable mounting system 20 that allows for thermal expansion and contraction of cables that are attached to a ladder rack. FIGS. 1-4 illustrate the cable mounting system with straight ladder rack segments 22 and a widened ladder rack segment 30. The straight ladder rack segments 22 include side rails 24 and a plurality of ladder rungs 26 extending between the side rails 24. A plurality of cable bracket assemblies 50 secure cables 120 to the ladder rungs 26 in the straight ladder rack segments 22. The cable bracket assemblies 50 allow axial movement of the cables 120.

The widened ladder rack segment 30 includes side rails 32, angled rails 34, and a plurality of ladder rungs 36 extending between the side rails 32. The angled rails 34 connect the side rail 24 of an adjacent straight ladder rack segment 22 with a side rail 32 of the widened ladder rack segments 30. Saddle bracket assemblies 100 secure the cables 120 to the widened ladder rack segment 30. The saddle bracket assemblies 1 00 allow axial and lateral movement of the cables 120. The cable mounting system 20 allows the cable length differences to travel axially in the straight rack segments 22 and the lateral movement in the widened rack segment 30 collects or delivers the cable length, as required.

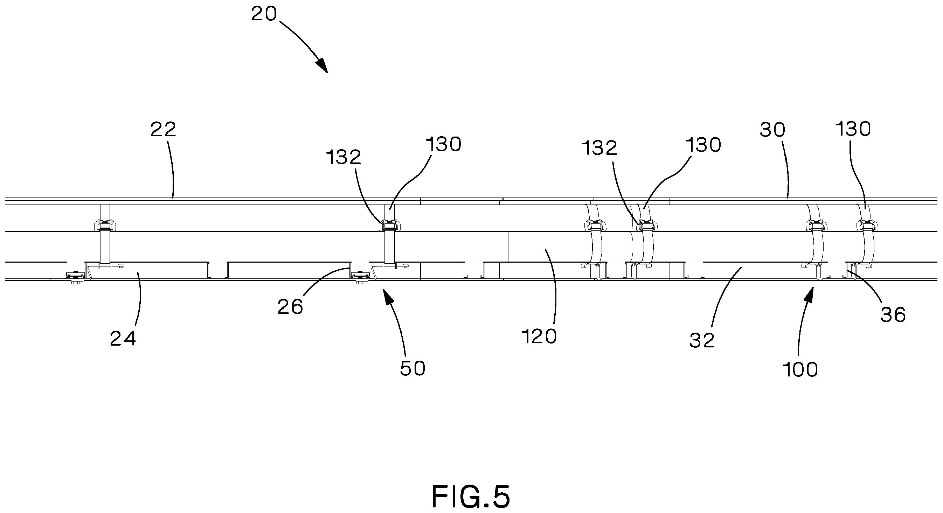

FIG. 5 illustrates a side view of the cable mounting system 20 with cable bracket assemblies 50 securing cables 120 to the straight ladder rack segment 22 and saddle bracket assemblies 100 with pairs of cable straps 130 with a buckle 132 securing the cables 120 to the widened ladder rack segment 30. While cable straps are illustrated, cable ties may also be used to secure the cables to the cable bracket assembly or the saddle bracket assembly.

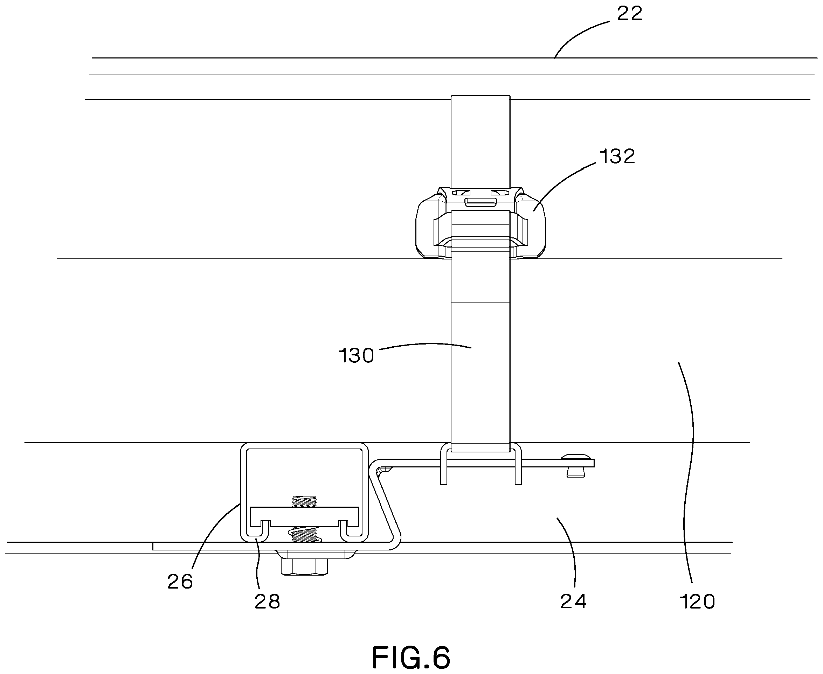

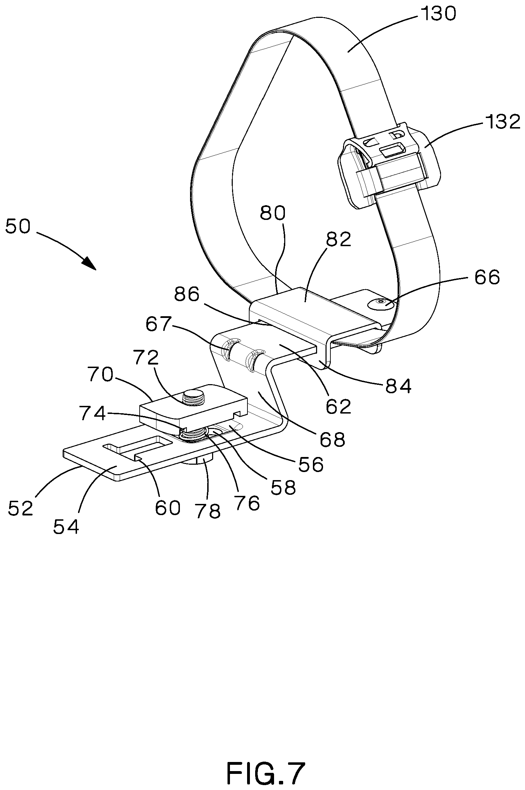

FIGS. 6-8 illustrate detailed views of the cable bracket assembly 50. The cable bracket assembly 50 includes a mounting bracket 52, a sliding cable support 80, and a cable strap 130 with a buckle 132. The cable bracket assembly 50 also includes a channel nut 70, a compression spring 76, and a bolt 78.

The mounting bracket 52 is Z-shaped with a bottom member 54, a top member 62 and an angular member 68 joining the bottom member 54 and the top member 62. The mounting bracket 52 also includes gussets 67 between the top member 62 and the angular member 68. The bottom member 54 has a rectangular recess 56 with an oblong cutout 58 in the bottom. The rectangular recess 56 accommodates the compression spring 76, preventing it from over-compression. The channel nut 70 secures the mounting bracket 52 to a strut type ladder rung 26. The oblong cutout 58 accommodates the mounting bolt 78, allowing the mounting bolt 78 to slide to compensate for variations in cable ladder rung widths. The channel nut 70 has a centrally positioned threaded hole 72 and two parallel locating slots 74 on the underside. The threaded hole 72 receives the mounting bolt 78 to secure the channel nut 70. The locating slots 74 rest against the inner flanges 28 of the ladder rung 26 to prevent the channel nut 70 from undesired turning during the tightening of the mounting bolt 78.

The T-shaped cutout 60 provides an alternative means for securing the mounting bracket 52 to a straight ladder rack segment 22 with a ladder rung having different profiles, such as a round rung, a top hat rung, or a beam rung.

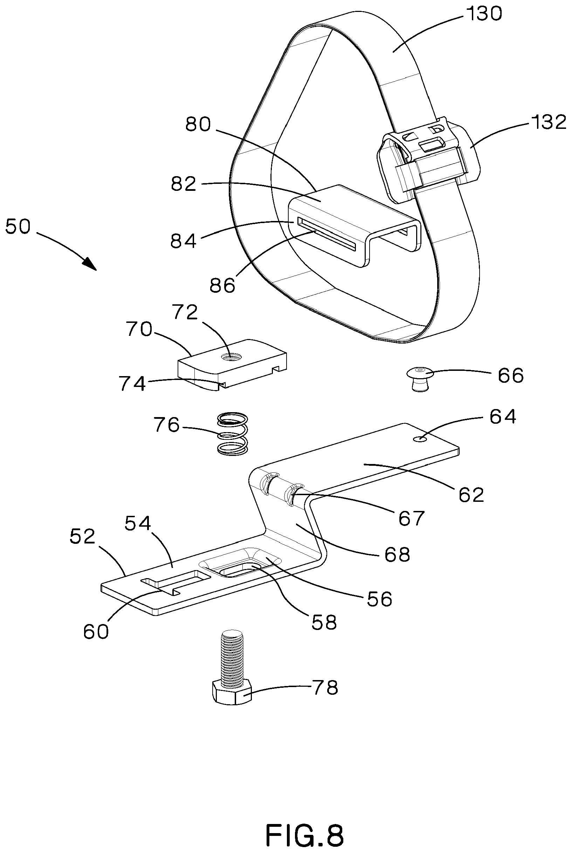

The top member 62 of the mounting bracket 52 has a round hole 64 at its distal end. The hole 64 accommodates a stopper 66 for limiting the movement of the sliding cable support 80. As illustrated in FIG. 8, the stopper 66 is a rivet. The stopper 66, however, may be a pin or a screw and nut. Alternatively, the hole 64 may be threaded to accommodate a screw without a nut.

The sliding cable support 80 is a C-shaped channel with a cable support top portion 82 and two downwardly extending side flanges 84. Each side flange 84 has a narrow rectangular slot 86. The rectangular slots 86 receive the top portion 62 of the mounting bracket 52. The sliding cable support 80 slides freely along the top member 62 of the mounting bracket 52 within the limits defined by the angular member 68 of the mounting bracket 52 on one end and the stopper 66 on the other end A cable strap 130 is routed between the sliding cable support 80 and the top portion 62 of the mounting bracket 52. Cables 120 are positioned on the sliding cable support 80 and the cable strap 130 wraps around the sliding cable support 80 and the cables 120 positioned thereon. As a result, the sliding cable support 80 retains the cable strap 130. Once installed, the sliding cable support 80 moves along the top member 62, as necessary, to compensate for thermal expansion in the cables 120 secured to the ladder rung 26. Thus, the cable bracket assemblies 50 in the straight ladder rack segments 22 enable axial movement of the cables 120 during thermal expansion.

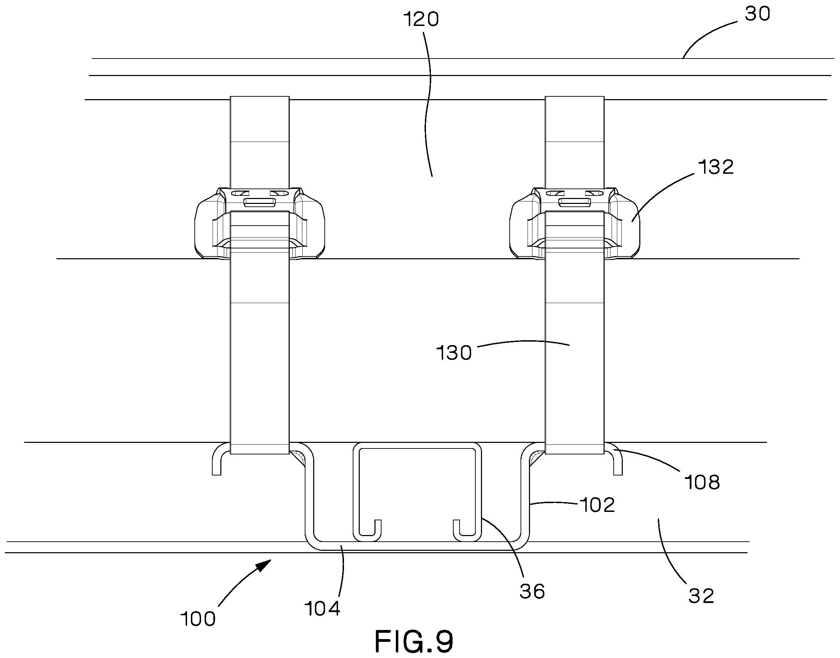

FIG. 9 illustrates a side view of the saddle bracket assembly 100 with a pair of cable straps 130 with buckles 132 installed on the cables 120. The saddle bracket assembly 100 includes a bracket main body 102 with a lower portion 104 and two upper portions 108. The lower portion 104 accommodates a ladder rung 36. As illustrated in FIG. 9, the lower portion 104 is wider than the ladder rung 36 of the widened ladder rack segment 30 which enables the saddle bracket main body 102 to slide under the ladder rung 36, when necessary, to compensate for cable thermal expansion. The upper portions 108 receive a pair of cable straps 130 to secure the cables 120 to the ladder rung 36 of the widened ladder rack segment 30. Thus, the saddle bracket assembly 100 in the widened ladder rack segment 30 accommodates the lateral movement of the cables 120 during thermal expansion.

Furthermore, while the particular preferred embodiments of the present invention have been shown and described, it will be obvious to those skilled in the art that changes and modifications may be made without departing from the scope of the invention. The matter set forth in the foregoing description and accompanying drawings is offered by way of illustration only and not as limitation.

## Claims

1. A cable mounting system (20) for allowing thermal expansion and contraction of cables (120), the cable mounting system (20) comprising:
straight ladder rack segments (22) having side rails (24) and a plurality of ladder rungs (26) extending between the side rails (24);
at least one widened ladder rack segment (30) positioned adjacent at least one of the straight ladder rack segments (22), the at least one widened ladder rack segment (30) having side rails (32), angled side rails (34), and a plurality of ladder rungs (36) extending between the side rails (32), wherein the angled side rails (34) connect the side rails (24) of adjacent straight ladder rack segments (22) to the side rails (32) of the at least one widened ladder rack segment (30);
**characterised in that** said cable mounting system (20) further comprises
cable bracket assemblies (50) mounted to the straight ladder rack segments (22), wherein the cable bracket assemblies (50) secure the cables (120) to the ladder rungs (26) of the straight ladder rack segments (22); and wherein
each cable bracket assembly (50) comprises:
a mounting bracket (52) with a bottom member (54), a top member (62), and an angular member (68) joining the bottom member (54) and the top member (62); and a sliding cable support (80) engaging the top member (62) of the mounting bracket (52); wherein
the sliding cable support (80) comprises a top portion (82) and side flanges (84) extending downwardly from the top portion (82); wherein
the side flanges (84) of the sliding cable support (80) have a rectangular slot (86), the rectangular slot (86) receives the top portion (62) of the mounting bracket (52), whereby the sliding cable support (80) slides freely along the top member (62) to compensate for thermal expansion of the cables (120); wherein
a cable strap (130) or cable tie is routed between the sliding cable support (80) and the top portion (62) of the mounting bracket (52); and
saddle bracket assemblies (100) mounted to the at least one widened ladder rack segment (30), wherein the saddle bracket assemblies (100) secure the cables (120) on the ladder rungs (36) of the widened ladder rack segments (30).

2. The cable mounting system (20) of claim 1, wherein the cable bracket assemblies (50) allow axial movement of the cables (120).

3. The cable mounting system of claim 1, wherein the saddle bracket assemblies (50) allow axial and lateral movement of the cables (120).

4. The cable mounting system (20) of claim 1, wherein a distal end of the top portion (62) of the mounting bracket (52) includes an opening for receiving a stop member, wherein the stop member limits the movement of the sliding cable support (80).

5. The cable mounting system (20) of claim 1, wherein the ladder rung (26, 36) is secured to the bottom member (54) of the mounting bracket (52) and the cables (120) are positioned on the top portion (82) of the sliding cable support (80).

6. The cable mounting system of claim 5, wherein a cable strap (130) or cable tie wraps around the sliding cable support (80) and the cables (120) positioned thereon.

7. The cable mounting system (20) of claim 1, wherein each saddle bracket assembly (100) comprises a bracket main body (102) with a lower portion (104) and two upper portions (108).

8. The cable mounting system (20) of claim 7, wherein the lower portion (104) of the saddle bracket assembly (100) receives one of the ladder rungs (36) of the at least one widened ladder rack segments (30).

9. The cable mounting system of claim 8, wherein the lower portion (104) of the saddle bracket assembly (100) is wider than the ladder rung (36) of the widened ladder rack segment (30) for enabling the bracket main body (102) to slide under the ladder rung (36) to compensate for cable thermal expansion.

10. The cable mounting system (20) of claim 7, wherein the cables (120) are position on the upper portions (108) of the saddle bracket assembly (100), and the upper portions (108) receive a pair of cable straps (130) or cable ties to secure the cables (120).

11. A method of mounting cables (120) to a ladder rack system to enable thermal expansion and contraction of the cables (120), the method comprising the steps of:
providing straight ladder rack segments (22) having side rails (24) and a plurality of ladder rungs (26) extending between the side rails (24);
providing at least one widened ladder rack segment (30) positioned adjacent at least one of the straight ladder rack segments (22), the at least one widened ladder rack segment (30) having side rails (32), angled side rails (34), and a plurality of ladder rungs (36) extending between the side rails (32), wherein the angled side rails (34) connect the side rails (24) of adjacent straight ladder rack segments (22) to the side rails (32) of the at least one widened ladder rack segment (30); said method being **characterised by** the following further steps:
mounting cable bracket assemblies (50) to the straight ladder rack segments (22), wherein the cable bracket assemblies (50) secure the cables (120) to the ladder rungs (26) of the straight ladder rack segments (22); and wherein
each cable bracket assembly (50) comprises:
a mounting bracket (52) with a bottom member (54), a top member (62), an angular member (68) joining the bottom member (54) and the top member (62) and a sliding cable support (80) engaging the top member (62) of the mounting bracket (52); wherein
the sliding cable support (80) comprises a top portion (82) and side flanges (84) extending downwardly from the top portion (82); wherein
the side flanges (84) of the sliding cable support (80) have a rectangular slot (86), the rectangular slot (86) receives the top portion (62) of the mounting bracket (52), whereby the sliding cable support (80) slides freely along the top member (62) to compensate for thermal expansion of the cables (120); wherein
a cable strap (130) or cable tie is routed between the sliding cable support (80) and the top portion (62) of the mounting bracket (52); and
mounting saddle bracket assemblies (100) to the at least one widened ladder rack segment (30), wherein the saddle bracket assemblies (100) secure the cables (120) on the ladder rungs (36) of the widened ladder rack segments (30).

12. The method of claim 11, wherein the cable bracket assemblies (50) allow axial movement of the cables (120).

13. The method of claim 11, wherein the saddle bracket assemblies (100) allow axial and lateral movement of the cables (120).

14. The method of claim 11, wherein the saddle bracket assembly (100) comprises a bracket main body (102) that receives one of the ladder rungs (36) of the at least one widened ladder rack segments (30) for enabling the bracket main body (102) to slide under the ladder rung (36) to compensate for cable thermal expansion.

## Patentansprüche

1. Kabelmontagesystem (20) zum Zulassen thermischer Ausdehnung und Schrumpfung von Kabeln (120), wobei das Kabelmontagesystem (20) Folgendes umfasst:
gerade Kabelleitersegmente (22), die Seitenschienen (24) und mehrere Leitersprossen (26), die sich zwischen den Seitenschienen (24) erstrecken, aufweisen;
mindestens ein verbreitertes Kabelleitersegment (30), das an mindestens eins der geraden Kabelleitersegmente (22) angrenzend positioniert ist, wobei das mindestens eine verbreiterte Kabelleitersegment (30) Seitenschienen (32), angewinkelte Seitenschienen (34) und mehrere Leitersprossen (36), die sich zwischen den Seitenschienen (32) erstrecken, aufweist, wobei die angewinkelten Seitenschienen (34) die Seitenschienen (24) angrenzender gerader Kabelleitersegmente (22) mit den Seitenschienen (32) des mindestens einen verbeiterten Kabelleitersegments (30) verbinden;
**dadurch gekennzeichnet, dass** das Kabelmontagesystem (20) ferner Folgendes umfasst:
Kabelkonsolenanordnungen (50), die an den geraden Kabelleitersegmenten (22) montiert sind, wobei die Kabelkonsolenanordnungen (50) die Kabel (120) an den Kabelsprossen (26) der geraden Kabelleitersegmente (22) befestigen; und wobei
jede Kabelkonsolenanordnung (50) Folgendes umfasst:
eine Montagekonsole (52) mit einem unteren Element (54), einem oberen Element (62) und einem Winkelelement (68), das das untere Element (54) mit dem oberen Element (62) verbindet; und einen Kabelschiebeträger (80), der in das obere Element (62) der Montagekonsole (52) eingreift; wobei
der Kabelschiebeträger (80) einen oberen Abschnitt (82) und Seitenflansche (84), die sich vom oberen Abschnitt (82) nach unten erstrecken, umfasst; wobei
die Seitenflansche (84) des Kabelschiebeträgers (80) einen rechteckigen Schlitz (86) aufweisen, wobei der rechteckige Schlitz (86) den oberen Abschnitt (62) der Montagekonsole (52) aufnimmt, wobei sich der Kabelschiebeträger (80) frei entlang des oberen Elements (62) verschiebt, um die thermische Ausdehnung der Kabel (120) auszugleichen; wobei
ein Kabelband (130) oder ein Kabelbinder zwischen den Kabelschiebeträger (80) und den oberen Abschnitt (62) der Montagekonsole (52) geführt wird; und
Kabelschellenanordnungen (100), die an das mindestens eine verbreiterte Kabelleitersegment (30) montiert sind, wobei die Kabelschellenanordnungen (100) die Kabel (120) auf den Leitersprossen (36) der verbreiterten Kabelleitersegmente (30) befestigen.

2. Kabelmontagesystem (20) nach Anspruch 1, wobei die Kabelkonsolenanordnungen (50) eine Axialbewegung der Kabel (120) zulassen.

3. Kabelmontagesystem nach Anspruch 1, wobei die Kabelschellenanordnungen (50) eine Axial- und Lateralbewegung der Kabel (120) zulassen.

4. Kabelmontagesystem (20) nach Anspruch 1, wobei ein distales Ende des oberen Abschnitts (62) der Montagekonsole (52) eine Öffnung zur Aufnahme eines Anschlagelements enthält, wobei das Anschlagelement die Bewegung des Kabelschiebeträgers (80) einschränkt.

5. Kabelmontagesystem (20) nach Anspruch 1, wobei die Leitersprosse (26, 36) am unteren Element (54) der Montagekonsole (52) befestigt ist und die Kabel (120) auf dem oberen Abschnitt (82) des Kabelschiebeträgers (80) positioniert sind.

6. Kabelmontagesystem nach Anspruch 5, wobei ein Kabelband (130) oder ein Kabelbinder um den Kabelschiebeträger (80) und die darauf positionierten Kabel (120) gewickelt ist.

7. Kabelmontagesystem (20) nach Anspruch 1, wobei jede Kabelschellenanordnung (100) einen Schellenhauptkörper (102) mit einem unteren Abschnitt (104) und zwei oberen Abschnitten (108) umfasst.

8. Kabelmontagesystem (20) nach Anspruch 7, wobei der untere Abschnitt (104) der Kabelschellenanordnung (100) eine der Leitersprossen (36) des mindestens einen verbeiterten Kabelleitersegments (30) aufnimmt.

9. Kabelmontagesystem nach Anspruch 8, wobei der untere Abschnitt (104) der Kabelschellenanordnung (100) breiter als die Leitersprosse (36) des verbreiterten Kabelleitersegments (30) ist, um zuzulassen, dass sich der Schellenhauptkörper (102) unter die Leitersprosse (36) verschiebt, um die thermische Kabelausdehnung auszugleichen.

10. Kabelmontagesystem (20) nach Anspruch 7, wobei die Kabel (120) auf den oberen Abschnitten (108) der Kabelschellenanordnung (100) positioniert sind und die oberen Abschnitte (108) ein Paar Kabelbänder (130) oder Kabelbinder aufnehmen, um die Kabel (120) zu befestigen.

11. Verfahren zur Montage von Kabeln (120) auf einem Kabelleitersystem, um die thermische Ausdehnung und Schrumpfung der Kabel (120) zuzulassen, wobei das Verfahren die folgenden Schritte umfasst:
Vorsehen von geraden Kabelleitersegmenten (22), die Seitenschienen (24) und mehrere Leitersprossen (26), die sich zwischen den Seitenschienen (24) erstrecken, aufweisen;
Vorsehen mindestens eines verbreiterten Kabelleitersegments (30), das an mindestens eins der geraden Kabelleitersegmente (22) angrenzt, wobei das mindestens eine verbreiterte Kabelleitersegment (30) Seitenschienen (32), angewinkelte Seitenschienen (34) und mehrere Leitersprossen (36), die sich zwischen den Seitenschienen (32) erstrecken, aufweist, wobei die angewinkelten Seitenschienen (34) die Seitenschienen (24) angrenzender gerader Kabelleitersegmente (22) mit den Seitenschienen (32) des mindestens einen verbeiterten Kabelleitersegments (30) verbinden;
wobei das Verfahren durch die folgenden weiteren Schritte gekennzeichnet ist:
Montieren von Kabelkonsolenanordnungen (50) an den geraden Kabelleitersegmenten (22), wobei die Kabelkonsolenanordnungen (50) die Kabel (120) an den Kabelsprossen (26) der geraden Kabelleitersegmente (22) befestigen; und wobei
jede Kabelkonsolenanordnung (50) Folgendes umfasst:
eine Montagekonsole (52) mit einem unteren Element (54), einem oberen Element (62), einem Winkelelement (68), das das untere Element (54) mit dem oberen Element (62) verbindet, und einem Kabelschiebeträger (80), der in das obere Element (62) der Montagekonsole (52) eingreift; wobei
der Kabelschiebeträger (80) einen oberen Abschnitt (82) und Seitenflansche (84), die sich vom oberen Abschnitt (82) nach unten erstrecken, umfasst; wobei die Seitenflansche (84) des Kabelschiebeträgers (80) einen rechteckigen Schlitz (86) aufweisen, wobei der rechteckige Schlitz (86) den oberen Abschnitt (62) der Montagekonsole (52) aufnimmt, wobei sich der Kabelschiebeträger (80) frei entlang des oberen Elements (62) verschiebt, um die thermische Ausdehnung der Kabel (120) auszugleichen; wobei
ein Kabelband (130) oder ein Kabelbinder zwischen den Kabelschiebeträger (80) und den oberen Abschnitt (62) der Montagekonsole (52) geführt wird; und
Montieren von Kabelschellenanordnungen (100) an das mindestens eine verbreiterte Kabelleitersegment (30), wobei die Kabelschellenanordnungen (100) die Kabel (120) auf den Leitersprossen (36) der verbreiterten Kabelleitersegmente (30) befestigen.

12. Verfahren nach Anspruch 11, wobei die Kabelkonsolenanordnungen (50) eine Axialbewegung der Kabel (120) zulassen.

13. Verfahren nach Anspruch 11, wobei die Kabelschellenanordnungen (100) eine Axial- und Lateralbewegung der Kabel (120) zulassen.

14. Verfahren nach Anspruch 11, wobei die Kabelschellenanordnung (100) einen Schellenhauptkörper (102) umfasst, der eine der Leitersprossen (36) des mindestens einen verbreiterten Kabelleitersegments (30) aufnimmt, um zuzulassen, dass sich der Schellenhauptkörper (102) unter die Leitersprosse (36) verschiebt, um die thermische Kabelausdehnung auszugleichen.

## Revendications

1. Système de montage de câble (20) destiné à permettre une expansion et une contraction thermiques des câbles (120), le système de montage de câble (20) comprenant :
des segments de support d'échelle droits (22) ayant des rails latéraux (24) et une pluralité de barreaux d'échelle (26) s'étendant entre les rails latéraux (24) ;
au moins un segment de support d'échelle élargi (30) positionné de manière adjacente à au moins l'un des segments de support d'échelle droits (22), l'au moins un segment de support d'échelle élargi (30) ayant des rails latéraux (32), des rails latéraux coudés (34) et une pluralité de barreaux d'échelle (36) s'étendant entre les rails latéraux (32), les rails latéraux coudés (34) reliant les rails latéraux (24) des segments de support d'échelle droits (22) adjacents aux rails latéraux (32) de l'au moins un segment de support d'échelle élargi (30) ;
**caractérisé en ce que** ledit système de montage de câble (20) comprend en outre
des ensembles de support de câble (50) montés sur les segments de support d'échelle droits (22), les ensembles de support de câble (50) fixant les câbles (120) aux barreaux d'échelle (26) des segments de support d'échelle droits (22) ; et
chaque ensemble de support de câble (50) comprenant :
un support de montage (52) avec un élément inférieur (54), un élément supérieur (62) et un élément angulaire (68) reliant l'élément inférieur (54) et l'élément supérieur (62) ; et un support de câble coulissant (80) venant en prise avec l'élément supérieur (62) du support de montage (52) ;
le support de câble coulissant (80) comprenant une partie supérieure (82) et des brides latérales (84) s'étendant vers le bas à partir de la partie supérieure (82) ;
les brides latérales (84) du support de câble coulissant (80) ayant une fente rectangulaire (86), la fente rectangulaire (86) recevant la partie supérieure (62) du support de montage (52), moyennant quoi le support de câble coulissant (80) coulisse librement le long de l'élément supérieur (62) pour compenser l'expansion thermique des câbles (120) ;
une sangle de câble (130) ou un serre-câble étant acheminé entre le support de câble coulissant (80) et la partie supérieure (62) du support de montage (52) ; et
des ensembles de support de sellette (100) montés sur l'au moins un segment de support d'échelle élargi (30), les ensembles de support de sellette (100) fixant les câbles (120) sur les barreaux d'échelle (36) des segments de support d'échelle élargis (30).

2. Système de montage de câble (20) selon la revendication 1, les ensembles de support de câble (50) permettant un mouvement axial des câbles (120).

3. Système de montage de câble selon la revendication 1, les ensembles de support de sellette (50) permettant un mouvement axial et latéral des câbles (120).

4. Système de montage de câble (20) selon la revendication 1, une extrémité distale de la partie supérieure (62) du support de montage (52) comprenant une ouverture pour recevoir un élément d'arrêt, l'élément d'arrêt limitant le mouvement du support de câble coulissant (80).

5. Système de montage de câble (20) selon la revendication 1, le barreau d'échelle (26, 36) étant fixé à la partie inférieure (54) du support de montage (52) et les câbles (120) étant positionnés sur la partie supérieure (82) du support de câble coulissant (80).

6. Système de montage de câble selon la revendication 5, une sangle de câble (130) ou un serre-câble s'enroulant autour du support de câble coulissant (80) et des câbles (120) positionnés sur ce dernier.

7. Système de montage de câble (20) selon la revendication 1, chaque ensemble de support de sellette (100) comprenant un corps principal de support (102) avec une partie inférieure (104) et deux parties supérieures (108) .

8. Système de montage de câble (20) selon la revendication 7, la partie inférieure (104) de l'ensemble de support de sellette (100) recevant l'un des barreaux d'échelle (36) de l'au moins un segment de support d'échelle élargi (30).

9. Système de montage de câble selon la revendication 8, la partie inférieure (104) de l'ensemble de support de sellette (100) étant plus large que le barreau d'échelle (36) du segment de support d'échelle élargi (30) pour permettre au corps principal de support (102) de glisser sous le barreau d'échelle (36) pour compenser l'expansion thermique du câble.

10. Système de montage de câble (20) selon la revendication 7, les câbles (120) étant positionnés sur les parties supérieures (108) de l'ensemble de support de sellette (100), et les parties supérieures (108) recevant une paire de sangles de câble (130) ou de serre-câbles pour fixer les câbles (120).

11. Procédé de montage de câble (120) sur un système de support d'échelle pour permettre l'expansion et la contraction thermiques des câbles (120), le procédé comprenant les étapes consistant à :
fournir des segments de support d'échelle droits (22) ayant des rails latéraux (24) et une pluralité de barreaux d'échelle (26) s'étendant entre les rails latéraux (24) ;
fournir au moins un segment de support d'échelle élargi (30) positionné de manière adjacente à au moins un des segments de support d'échelle droits (22), l'au moins un segment de support d'échelle élargi (30) ayant des rails latéraux (32), des rails latéraux coudés (34) et une pluralité de barreaux d'échelle (36) s'étendant entre les rails latéraux (32), les rails latéraux coudés (34) reliant les rails latéraux (24) de segments de support d'échelle droits (22) adjacents aux rails latéraux (32) de l'au moins un segment de support d'échelle élargi (30) ;
ledit procédé étant **caractérisé par** les étapes supplémentaires consistant à :
monter les ensembles de support de câble (50) sur les segments de support d'échelle droits (22), les ensembles de support de câble (50) fixant les câbles (120) aux barreaux d'échelle (26) des segments de support d'échelle droits (22) ; et
chaque ensemble de support de câble (50) comprenant :
un support de montage (52) avec un élément inférieur (54), un élément supérieur (62) et un élément angulaire (68) reliant l'élément inférieur (54) et l'élément supérieur (62) ; et un support de câble coulissant (80) venant en prise avec l'élément supérieur (62) du support de montage (52) ;
le support de câble coulissant (80) comprenant une partie supérieure (82) et des brides latérales (84) s'étendant vers le bas à partir de la partie supérieure (82) ;
les brides latérales (84) du support de câble coulissant (80) ayant une fente rectangulaire (86), la fente rectangulaire (86) recevant la partie supérieure (62) du support de montage (52), moyennant quoi le support de câble coulissant (80) coulisse librement le long de l'élément supérieur (62) pour compenser l'expansion thermique des câbles (120) ;
une sangle de câble (130) ou un serre-câble étant acheminé entre le support de câble coulissant (80) et la partie supérieure (62) du support de montage (52) ; et
monter des ensembles de support de sellette (100) sur l'au moins un segment de support d'échelle élargi (30), les ensembles de support de sellette (100) fixant les câbles (120) sur les barreaux d'échelle (36) des segments de support d'échelle élargis (30).

12. Procédé selon la revendication 11, les ensembles de support de câble (50) permettant un mouvement axial des câbles (120).

13. Procédé selon la revendication 11, les ensembles de support de sellette (100) permettant un mouvement axial et latéral des câbles (120).

14. Procédé selon la revendication 11, l'ensemble de support de sellette (100) comprenant un corps principal de support (102) qui reçoit l'un des échelons d'échelle (36) de l'au moins un segment de support d'échelle élargi (30) pour permettre au corps principal de support (102) de glisser sous le barreau d'échelle (36) pour compenser l'expansion thermique du câble.
